# EUROPÄISCHE PATENTANMELDUNG

(11) **EP 1 300 923 A2**
(43) Veröffentlichungstag der Anmeldung: **09.04.2003**
(21) Anmeldenummer: 02022515.7
(22) Anmeldetag: 07.10.2002
(51) Int. Cl.: H02K 1/17, H02K 5/15, H02K 1/18

(54) **Gleichstrommotor**

(30) Priorität: 06.10.2001 DE 10149427
(71) Anmelder: ROBERT BOSCH GMBH, 70442 Stuttgart (DE)
(72) Erfinder: Fuhr, Steffen, 71088 Holzgerlingen (DE)

(57) **Zusammenfassung**

Die Erfindung betrifft einen Gleichstrommotor, insbesondere Startermotor für Kraftfahrzeuge, mit einem einen Anker aufnehmenden Polgehäuse, wobei das Polgehäuse Permanentmagnete zur Permanenterregung des Gleichstrommotors trägt.

Es ist vorgesehen, dass die Permanentmagnete (16) durch ein Lagerschild (20) des Polgehäuses (10) gehalten sind.

## Beschreibung

Die Erfindung betrifft einen Gleichstrommotor, insbesondere Startermotor für Kraftfahrzeuge, mit den im Oberbegriff des Anspruchs 1 genannten Merkmalen.

### Stand der Technik

Gleichstrommotoren der gattungsgemäßen Art sind bekannt. Bei permanenterregten Gleichstrommotoren sind innerhalb des Polgehäuses Permanentmagneten angeordnet, die einen Läufer (Anker) des Startermotors umgreifen. Allgemein bekannte Gleichstrommotoren besitzen beispielsweise sechs in einer 60°-Teilung über den Umfang des Polgehäuses angeordnete Permanentmagneten. Aufgrund relativ robuster Einsatzbedingungen der Gleichstrommotoren, insbesondere wenn diese als Startermotor in Kraftfahrzeugen eingesetzt werden, kommt der Befestigung der Permanentmagnete am Polgehäuse besondere Bedeutung zu. Bekannt ist hierzu, die Permanentmagnete beispielsweise einzukleben. Hierbei ist nachteilig, dass diese Fertigungstechnik nur mit relativ hohem Aufwand möglich ist. So muss zunächst ein Klebemittel aufgebracht werden und anschließend die Permanentmagneten mit dem Polgehäuse - gegebenenfalls unter Aufbringung einer zusätzlichen Fügekraft - gefügt werden. Ferner ist hierbei nachteilig, dass aufgrund der Einsatzbedingungen der Gleichstrommotoren Klebstoffe mit einer relativ hohen Temperaturbeständigkeit, von beispielsweise bis 250 °C, verwendet werden müssen. Ferner ist nachteilig, dass bei einer Klebeverbindung es zu einer einseitig starren Befestigung der Permanentmagnete am Polgehäuse kommt. Bei robusten Einsatzbedingungen der Gleichstrommotoren kann es hier zu so genannten Schichtabplatzern kommen.

Ferner ist bekannt, die Permanentmagnete am Polgehäuse durch Haltefedern zu befestigen. Hierbei werden die Haltefedern zwischen zwei benachbarte Permanentmagnete eingeklippst, so dass eine Federkraft der Haltefedern tangential auf die Permanentmagneten wirkt, so dass diese gegen das Polgehäuse gespannt sind. Hierbei ist nachteilig, dass eine derartige Befestigung der Permanentmagneten nur im Verbund, das heißt gleichzeitiges Einbringen aller Haltefedern, möglich ist. Schon eine Fehllage einer einzigen Haltefeder, beispielsweise durch Verdrehen oder Verkippen, führt zu einem Abfallen aller Permanentmagneten, so dass der Vorgang aufwendig wiederholt werden muss. Darüber hinaus ist ein zusätzlicher Herstellungsaufwand für die Haltefedern erforderlich.

### Vorteile der Erfindung

Der erfindungsgemäße Gleichstrommotor mit den in Anspruch 1 genannten Merkmalen bietet demgegenüber den Vorteil, dass in einfacher Weise die Permanentmagnete positioniert werden können. Dadurch, dass die Permanentmagnete durch ein Lagerschild des Polgehäuses gehalten sind, kann auf zusätzliche Befestigungsmittel, beispielsweise Klebemittel, Haltefedern und dergleichen, verzichtet werden. Hierdurch kommt es einerseits zu einer Verringerung des Herstellungsaufwandes und andererseits zu einer Material- und somit Gewichtseinsparung des Gleichstrommotors. Insbesondere, wenn Haltestrukturen für die Permanentmagnete in bevorzugter Ausgestaltung der Erfindung in das Lagerschild integriert sind, lässt sich eine Positionierung der Permanentmagnete in einfacher Weise erreichen. Ferner kann durch die Integration der Haltestrukturen in das Lagerschild eine sehr präzise Positionierung der Permanentmagnete erfolgen. Insbesondere wird hierdurch eine axial genaue Ausrichtung der Permanentmagnete zueinander und somit zum Anker des Gleichstrommotors möglich. Hierdurch wird eine magnetische Mitte der Gesamtanordnung der Permanentmagnete und somit eine Ausrichtung der Drehachse des Ankers zur magnetischen Mitte eindeutig definierbar. Eine mögliche Translationsbewegung und ein damit verbundenes Anschlagen des Gleichstrommotors an seinen Lagerstellen wird somit unterbunden, zumindest erheblich reduziert. Es ergeben sich neben den Montage- und Materialeinsparungen auch eine verminderte Geräuschentwicklung und somit Komfortverbesserung des Kraftfahrzeuges.

In weiterer bevorzugter Ausgestaltung der Erfindung ist vorgesehen, dass die Haltestrukturen einstückig mit dem Lagerschild ausgebildet sind und insbesondere durch Stanz- und Biegeschritte eines Rohlings erhalten werden. Somit wird eine besonders einfache und genaue Herstellung des Lagerschildes mit den Haltestrukturen für die Permanentmagnete möglich. Insbesondere ist eine für eine Massenproduktion geeignete Verfahrensweise realisierbar.

Weitere bevorzugte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnungen näher erläutert. Es zeigen:
- Figur 1: eine Draufsicht auf ein Polgehäuse eines Gleichstrommotors;
- Figur 2: einen Längsschnitt durch das Polgehäuse gemäß Figur 1;
- Figur 3: eine schematische Perspektivansicht eines Lagerschildes;
- Figur 4: eine Detailvergrößerung des Lagerschildes und
- Figur 5: eine Perspektivansicht eines Polgehäuses in Explosionsdarstellung.

### Beschreibung des Ausführungsbeispiels

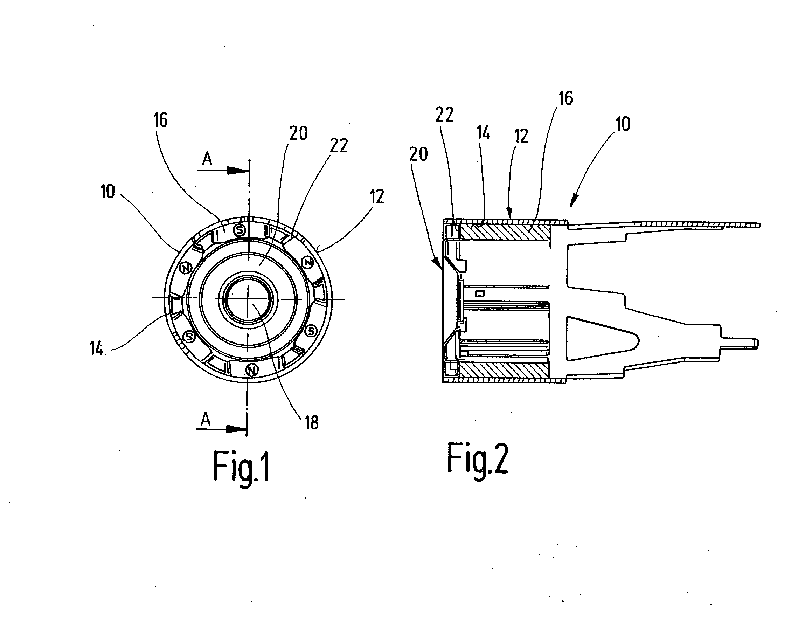

Figur 1 zeigt in Draufsicht ein Polgehäuse 10 eines permanenterregten Gleichstrommotors. Das Polgehäuse 10 besitzt einen im Wesentlichen zylinderförmigen Abschnitt 12, innerhalb dem ein hier nicht dargestellter Anker des Gleichstrommotors angeordnet ist. An einem Innenumfang 14 des Polgehäuses 10 sind über den Umfang Permanentmagnete 16 angeordnet. Die Permanentmagnete 16 sind koaxial zu einer Mittelachse 18 angeordnet. Im gezeigten Beispiel sind insgesamt sechs Permanentmagnete 16 mit einer Teilung von 60° über den Innenumfang 14 angeordnet. Die Permanentmagnete 16 liegen formschlüssig am Innenumfang 14 an und sind durch ein Lagerschild 20 gehalten. Das Lagerschild 20 bildet hierzu - wie an den nachfolgenden Figuren noch erläutert wird - Haltestrukturen 22 aus.

Anhand der Schnittdarstellung in Figur 2 wird deutlich, dass sich die Permanentmagneten 16 axial über den Abschnitt 12 des Polgehäuses 10 erstrecken. Die Permanentmagneten 16 werden somit von im Wesentlichen plattenförmigen Elementen gebildet, deren Außenkontur an den Innenumfang 14 und deren Innenkontur an den nicht dargestellten Anker angepasst sind. Der Anker wird einerseits durch das Lagerschild 20 (B-Lager) und andererseits durch ein nicht dargestelltes Antriebs-Lagerschild (A-Lager) drehbar gelagert.

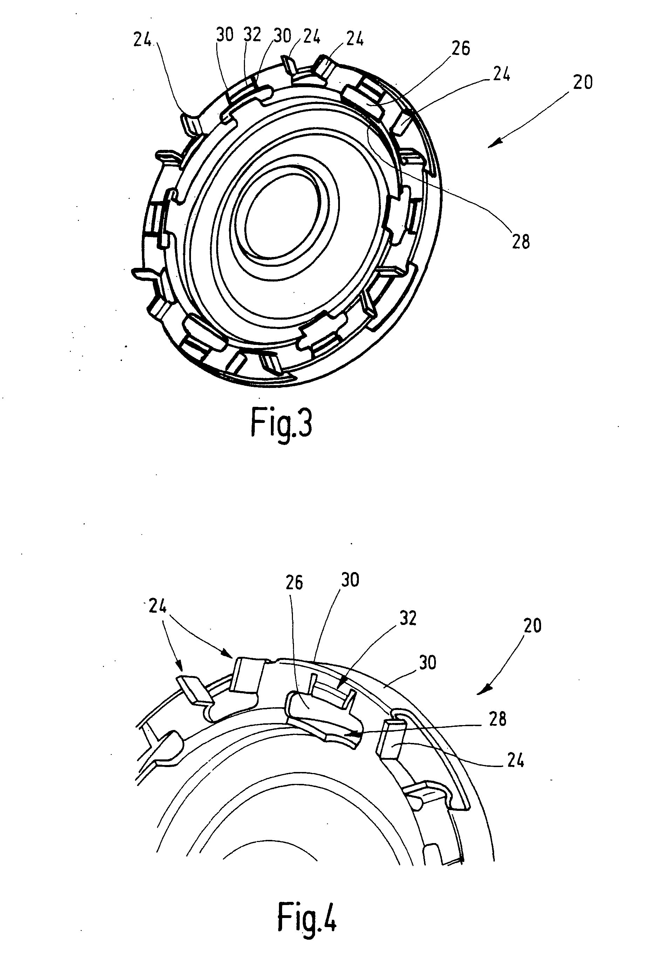

Figur 3 zeigt in einer schematischen Perspektivansicht das Lagerschild 20, und zwar aus Richtung der Draufsicht gemäß Figur 1. Das Lagerschild 20 ist als Stanz-/Biegeteil ausgebildet und besteht beispielsweise aus einem metallischen Material. Über den Umfang des Lagerschildes 20 sind jeweils paarweise zusammengehörend Haltelappen 24 ausgestanzt und umgebogen. Die Haltelappen 24 erstrecken sich hierbei koaxial zur Mittelachse 18 (Figur 1). Ein Abstand der zusammengehörenden Haltelappen 24 entspricht hierbei einer Kreissegmenterstreckung der Permanentmagneten 16. Ein Permanentmagnet 16 wird jeweils spielfrei zwischen den paarweise zusammengehörigen Haltelappen 24 gehalten. Die Haltelappen können hierbei mit einer geringen Vorspannung versehen sein, so dass eine Federkraft auf die Permanentmagnete 16 ausgeübt ist. Diese Federkraft dient einer Vorpositionierung der Permanentmagnete 16 während der Montage des Lagerschildes 20 mit den Permanentmagneten 16 im Polgehäuse 10. Die Haltelappen 24 übernehmen hierbei eine Tangentialfixierung der Permanentmagneten 16.

Jedem Paar der Haltelappen 24 ist ein Durchbruch 26 zugeordnet, von dem ein koaxial zur Mittellinie 18 verlaufender Haltelappen 28 entspringt. Die Axialerstreckung des Haltelappens 28 entspricht in etwa der Axialerstreckung der Haltelappen 24. Durch den Haltelappen 28 wird ein Aufnahmebereich zwischen den Haltelappen 24 radial zur Mittelachse 18 begrenzt. Die zwischen den Haltelappen 24 angeordneten Permanentmagnete 16 liegen auf den Haltelappen 28 auf. Dieser bildet somit eine Radialfixierung für die Permanentmagnete 16.

Vom Durchbruch 26 entspringen zwei radial zur Mittelachse 18 verlaufende Einstiche 30, so dass es zur Ausbildung eines einseitig eingespannten Plättchens 32 kommt, das durch den Durchbruch 26 und die Einstiche 30 begrenzt ist. Das Plättchen 32 ist mit einer geringen Vorspannung in axialer Richtung - in Bezug auf die Mittelachse 18 - aus der im Wesentlichen radialen Ebene des Lagerschildes 20 abgewinkelt. Dieses derart vorgespannte Plättchen 32 bildet einen federnden Anschlag für den zwischen den Haltelappen 24 beziehungsweise 26 aufgenommenen Permanentmagneten 16. Diese Plättchen bilden eine Axialfixierung für die Permanentmagneten 16.

Figur 4 zeigt in einer Perspektivansicht ausschnittsweise das Lagerschild 20 in einem Aufnahmebereich für die Permanentmagneten 16. Es wird deutlich, dass der Aufnahmebereich durch die Haltelappen 24 in tangentialer Richtung, durch den Haltelappen 28 in radialer Richtung und durch das Plättchen 32 in axialer Richtung begrenzt ist. Die Haltelappen 24, 28 und die Plättchen 32 bilden die Haltestrukturen 22 für den Permanentmagneten 16. Es wird deutlich, dass die Haltestrukturen 22 einstückig mit dem Lagerschild 20 ausgebildet sind. Durch einfache, in Massenproduktion herstellbare Stanz- und Biegeschritte sind die Haltestrukturen 22 in das Lagerschild 20 integrierbar.

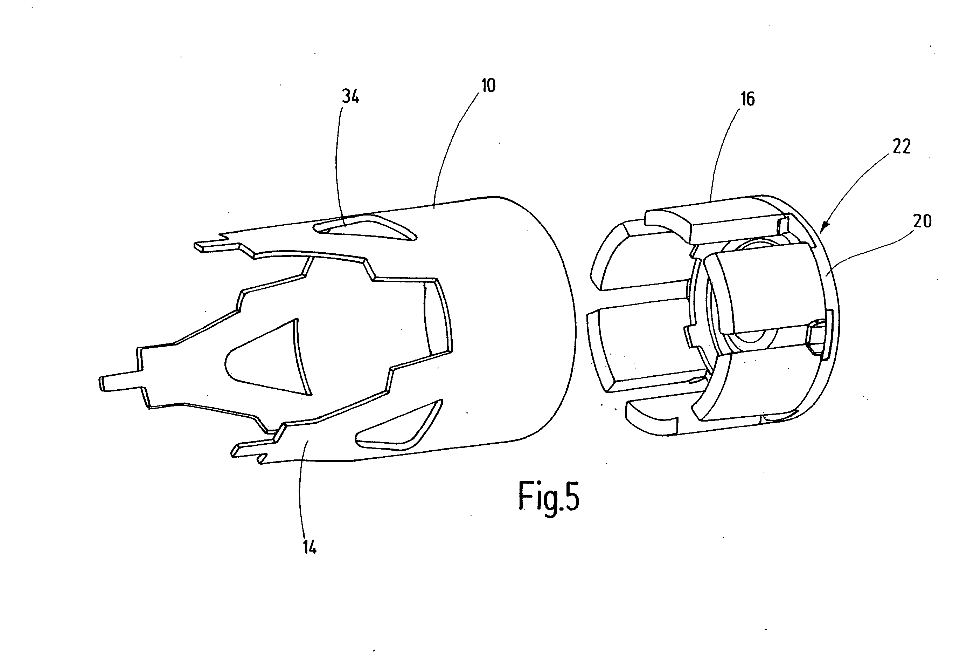

Die perspektivische Explosionsdarstellung in Figur 5 verdeutlicht nochmals den einfachen Aufbau. Die Permanentmagnete 16 sind in den Haltestrukturen 22 des Lagerschildes 20 positioniert. Dieses Positionieren der Permanentmagnete 16 in den Haltestrukturen 22 kann als Vormontage in einem nicht dargestellten Werkstückträger erfolgen. Anschließend wird diese vormontierte Einheit aus Lagerschild 20 und Permanentmagneten 16 axial in das Polgehäuse 10 eingeschoben. Hierbei gelangt das Lagerschild 20 in seinen Sitz am Polgehäuse 10. Am Innenumfang 14 des Polgehäuses 10 sind Sicken 34 vorgesehen, die als Gegenanschlag für die Permanentmagneten 16 dienen. Die Lage der Sicken 34 ist hierbei so gewählt, dass während des axialen Einschiebens der Permanentmagneten 16 in das Polgehäuse 10 diese bei Anschlag an die Sicken 34 eine Druckkraft auf die vorgespannten Plättchen 32 ausüben. Hierdurch erfolgt ein Verspannen der Permanentmagneten 16 zwischen den Sicken 34 und den Plättchen 32. Neben diesem Verspannen kann gleichzeitig ein Toleranzausgleich erfolgen. Entsprechend einer abweichenden axialen Länge der Permanentmagneten 16 (Herstellungstoleranzen der Permanentmagneten 16) werden die Plättchen 32 für jeden Permanentmagneten 16 unterschiedlich vorgespannt. In jedem Fall wird sichergestellt, dass alle Permanentmagneten 16 sicher innerhalb des Polgehäuses 10 gehalten sind.

## Patentansprüche

1. Gleichstrommotor, insbesondere Startermotor für Kraftfahrzeuge, mit einem einen Anker aufnehmenden Polgehäuse, wobei das Polgehäuse Permanentmagnete zur Permanenterregung des Gleichstrommotors trägt, **dadurch gekennzeichnet, dass** die Permanentmagnete (16) durch ein Lagerschild (20) des Polgehäuses (10) gehalten sind.

2. Gleichstrommotor nach Anspruch 1, **dadurch gekennzeichnet, dass** Haltestrukturen (22) für die Permanentmagnete (16) in das Lagerschild (20) integriert sind.

3. Gleichstrommotor nach Anspruch 2, **dadurch gekennzeichnet, dass** die Haltestrukturen (22) einstückig mit dem Lagerschild (20) ausgebildet sind.

4. Gleichstrommotor nach einem der vorhergehenden Ansprüche, **dadurch gekennzeichnet, dass** die Permanentmagnete (16) durch die Haltestrukturen (22) tangential, radial und axial zu einer Mittelachse (18) des Polgehäuses (10) fixiert sind.

5. Gleichstrommotor nach einem der vorhergehenden Ansprüche, **dadurch gekennzeichnet, dass** die Haltestrukturen (22) Haltelappen (24) umfassen, die koaxial zur Mittelachse (18) verlaufen und paarweise einem Permanentmagneten (16) zugeordnet sind und tangential zu diesem verlaufen.

6. Gleichstrommotor nach Anspruch 5, **dadurch gekennzeichnet, dass** die Haltelappen (24) in Richtung der Permanentmagnete (16) vorgespannt sind.

7. Gleichstrommotor nach einem der vorhergehenden Ansprüche, **dadurch gekennzeichnet, dass** die Haltestrukturen (22) Haltelappen (28) umfassen, die koaxial zur Mittelachse (18) verlaufen und jeweils einem Permanentmagneten (16) zugeordnet sind und radial zu diesem verlaufen.

8. Gleichstrommotor nach einem der vorhergehenden Ansprüche, **dadurch gekennzeichnet, dass** die Haltestrukturen (22) Plättchen (32) umfassen, die radial zur Mittelachse (18) verlaufen und jeweils einem Permanentmagneten (16) zugeordnet sind und axial zu diesem verlaufen.

9. Gleichstrommotor nach Anspruch 8, **dadurch gekennzeichnet, dass** die Plättchen (32) in Richtung der Permanentmagneten (16) vorgespannt sind.

10. Gleichstrommotor nach einem der vorhergehenden Ansprüche, **dadurch gekennzeichnet, dass** das Polgehäuse (10) an seinem Innenumfang (14) Sicken (34) aufweist, die einen axiale Gegenanschlag für die Permanentmagnete (16) bilden.
